Europäisches Patentamt

European Patent Office

Office européen des brevets

(19)

(11) Veröffentlichungsnummer: **0 209 033**
A1

# (12) EUROPÄISCHE PATENTANMELDUNG

(21) Anmeldenummer: 86109235.1

(22) Anmeldetag: 07.07.86

(51) Int. Cl.⁴: **C 08 K 3/04**, C 08 L 69/00, H 01 B 1/24

(30) Priorität: 19.07.85 DE 3525803

(43) Veröffentlichungstag der Anmeldung: **21.01.87** **Patentblatt 87/4**

(84) Benannte Vertragsstaaten: **DE FR GB IT**

(71) Anmelder: **BAYER AG, Konzernverwaltung RP Patentabteilung, D-5090 Leverkusen 1 Bayerwerk (DE)**

(72) Erfinder: **Haberland, Ulrich, Dr., Hüttenallee 147, D-4150 Krefeld 1 (DE)**
Erfinder: **Schulte, Bernhard, Dr., Doppelfeldstrasse 15, D-4150 Krefeld (DE)**
Erfinder: **Reinking, Klaus, Dr., Robert-Stolz-Strasse 16b, D-5632 Wermelskirchen 1 (DE)**
Erfinder: **Waldenrath, Werner, Maastrichterstrasse 40, D-5000 Köln 1 (DE)**

(54) Verfahren zur Herstellung von russgefüllten Polycarbonatformkörpern.

(57) Gegenstand der vorliegenden Erfindung sind ein Verfahren zur Herstellung von rußgefüllten Polycarbonatformkörpern, die nach dem Verfahren erhältlichen Polycarbonatformkörper und ihre Verwendung auf dem Elektrosektor.

EP 0 209 033 A1

BAYER AKTIENGESELLSCHAFT          5090 Leverkusen, Bayerwerk
Konzernverwaltung RP
Patentabteilung                   PS/by-c

## Verfahren zur Herstellung von rußgefüllten Polycarbonat-formkörpern

Gegenstand der vorliegenden Erfindung ist ein Verfahren zur Herstellung von rußgefüllten Polycarbonatformkörpern mit Gehalten an Ruß zwischen 10 und 35 Gew.-%, vorzugsweise zwischen 12 und 30 Gew.-%, das dadurch gekennzeichnet ist, daß man Polycarbonate mit 10 bis 35 Gew.-%, vorzugsweise 12 bis 30 Gew.-% Ruß einer Primärteilchengröße von <200nm, vorzugsweise <100 nm und insbesondere <50 nm, bei Temperaturen von 30 - 80°, vorzugsweise 40 - 70°, in einem Lösungsmittel für das Polycarbonat vermischt, die erhaltene Lösung bei Temperaturen unter 140°C, vorzugsweise unter 60°C ohne Einwirkung von Scherenergie eindampft und das resultierende Gemisch nach Verdichtung oder Kompaktierung, gegebenenfalls unter Zusatz von weiterem thermoplastischem Polycarbonat in üblicher Weise extrudiert oder spritzgießt.

Eine besondere Ausführungsform des erfindungsgemäßen Verfahrens besteht darin, daß man anstelle des primär hergestellten Gemisches übliche, bekannte rußgefüllte Polycarbonatgießfolien mit Rußgehalten zwischen 10 und 35 Gew.-%, vorzugsweise zwischen 12 und 30 Gew.-% einsetzt. Derartige Gießfolien sind bekannt (siehe beispielsweise BE-PS

Le A 23 926-EP

720 314 oder EP-OS 0141310 (Le A 22 590)). Gießfolien mit Filmdicken von 0,005 mm bis 0,3 mm, vorzugsweise von 0,01 bis 0,20 mm, werden hierbei bevorzugt eingesetzt, wobei wiederum Folienbänder einer Breite von 2 bis 200 mm gut geeignet sind.

Gegenstand der vorliegenden Erfindung sind außerdem die nach dem erfindungsgemäßen Verfahren erhältlichen Polycarbonatformkörper.

Rußgefüllte Polycarbonatformmassen sind bekannt. Die Einarbeitung von elektrisch leitfähigen Rußen mit Primärteilchengrößen von <100 nm und spezifischen Oberflächen bis 1000 m²/g oder mehr in schmelzflüssige Polycarbonate bereitet jedoch gewisse Probleme, wenn man einerseits eine gleichmäßige Verteilung des Rußes im Polycarbonat anstrebt, und andererseits dafür zu sorgen hat, die an Teilchengrößen und spezifische Oberflächenwerte gebundene Leitfähigkeit des Rußes beim Einarbeiten nicht wesentlich zu verringern oder gar ganz zu zerstören.

Selbst bei Einhaltung von Einarbeitungstemperaturen von etwa 300°C und kurzen Einarbeitungszeiten sind nicht immer Polycarbonatformkörper, beispielsweise Polycarbonatextrusionsfolien, mit guten Werten für die elektrische Leitfähigkeit bzw. niedrigen Werten für den spezifischen Durchgangswiderstand zu erhalten.

Thermoplastische aromatische Polycarbonate im Sinne der vorliegenden Erfindung sind die durch Umsetzung von Diphenolen, insbesondere von Dihydroxydiarylalkanen, mit

Le A 23 926

Phosgen oder Diestern der Kohlensäure erhältlichen Polykondensate, wobei außer den unsubstituierten Dihydroxydiarylalkanen auch solche geeignet sind, deren Arylreste
in o- und/oder m-Stellung zur Hydroxylgruppe Methylgruppen
oder Halogenatome tragen.

Geeignete Diphenole sind z.B. Hydrochinon, Resorcin,
4,4'-Dihydroxydiphenyl, Bis-(hydroxy-phenyl)-alkane wie
beispielsweise $C_1-C_8$-Alkylen- bzw. $C_2-C_8$-Alkylidenbis-
phenole, Bis-(hydroxy-phenyl)-cycloalkane wie beispielsweise $C_5-C_{15}$-Cycloalkylen- bzw. $C_5-C_{15}$-Cycloalkylidenbis-
phenole, Bis-(hydroxy-phenyl)-sulfide, -ether, -ketone,
-sulfoxide oder -sulfone. Ferner $\alpha,\alpha'$-Bis-(hydroxyphenyl)-diisopropylbenzol sowie die entsprechenden kernalkylierten bzw. kernhalogenierten Verbindungen. Bevorzugt
sind Polycarbonate auf Basis Bis-(4-hydroxy-phenyl)-propan-2,2 (Bisphenol A), Bis-(4-hydroxy-3,5-dibromphenyl)-propan-2,2 (Tetrabrombisphenol A), Bis-(4-
hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie
$\alpha,\alpha'$-Bis-(4-hydroxyphenyl)-p-diisopropylbenzol. Weitere,
für die Herstellung der Polycarbonate geeignete Diphenole
sind beispielsweise in den US-Patenten 3 028 365,
3 062 781 und 3 275 601 beschrieben.

Außer linearen Polycarbonaten sind auch verzweigte Polycarbonate geeignet; derartige verzweigte Polycarbonate
sind bekanntlich durch den Einbau geringer Mengen, vorzugsweise von Mengen zwischen 0,05 und 2,0 Mol-%, bezogen
auf eingesetzte Diphenole, an drei oder mehr als dreifunktionellen Verbindungen, beispielsweise solchen mit

Le A 23 926

drei oder mehr als drei phenolischen Hydroxygruppen herstellbar (siehe dazu beispielsweise DE-OS 1 570 533, DE-OS 1 595 762 und DE-OS 2 500 092). Einige der verwendbaren Verbindungen mit drei oder mehr als drei phenolischen Hydroxygruppen sind beispielsweise 1,3,5-Tri-(4-hydroxy-phenyl)-benzol, 1,1,1-Tri-(4-hydroxyphenyl)-ethan, 2,4-Bis-(4-hydroxyphenyl-isopropyl)-phenol, 2-(4-Hydroxyphenyl)-2-(2,4-dihydroxyphenyl)-propan, Hexa-(4-(4-hydroxyphenylisopropyl)phenyl)-orthophthalsäureester, Tetra-(4-hydroxyphenyl)-methan, Tetra-(4-(4-hydroxyphenylisopropyl)-phenoxy)-methan und 1,4-Bis-(4',4"-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Bevorzugte Polycarbonate sind solche aus Bisphenol-A und Copolycarbonate aus Bisphenol A und Bisphenol Z, welche von 0 bis 5 Mol-%, bezogen auf Mole an Diphenolen, Bisphenol Z einkondensiert enthalten.

Die erfindungsgemäß einsetzbaren Polycarbonate sollen mittlere Molekulargewichte $\overline{M}w$ (Gewichtsmittel) haben, die sich aus relativen Viskositäten von 1,2 bis 2,5, vorzugsweise 1,5 bis 2,2 ergeben. (Die relativen Viskositäten sind in bekannter Weise an 0,5 g/100 ml $CH_2Cl_2$-Lösungen bei 25°C gemessen). Daraus resultieren $\overline{M}w$-Werte zwischen etwa 20000 und etwa 250000, vorzugsweise zwischen etwa 40000 und 220000 (GPC-Molekulargewichtsbestimmung).

Die Herstellung der erfindungsgemäß geeigneten Polycarbonate erfolgt nach den bekannten Verfahren. Die Ein-

Le A 23 926

stellung des Molekulargewichts erfolgt in bekannter Weise mit Kettenabbrechern wie Phenol, Halogenphenolen oder Alkylphenolen in den bekannten Mengen.

Erfindungsgemäß geeignete Ruße sind Gasruße, Furnace-Ruße oder Flammruße mit mittleren Primärpartikelgrößen, die im allgemeinen elektronenmikroskopisch ermittelt werden, von unter 200 Nanometer (nm), vorzugsweise unter 100 Nanometer (nm) und insbesondere mit einer mittleren Primärteilchengröße von kleiner als 50 Nanometer.

Bevorzugt werden bekannte, sogenannte Leitfähigkeitsruße verwendet, die außer einer sehr geringen Primärteilchengröße eine große äußere und innere Oberfläche, d.h. hohe Porosität und somit hohe BET-Oberflächen bei der $N_2$-Adsorption und hohe Dibutylphthalat (DBP)-Adsorptions-werte aufweisen und weiterhin hochstrukturiert sind, d.h. starke Agglomerationen oder Aggregationen von einzelnen Rußteilchen zu größeren Gebilden wie z.B. Ketten aufweisen, wobei die BET-oberflächen der Ruße im allgemeinen größer sind als 50 $m^2$/g und die DBP-Adsorption oberhalb von 40 ml pro 100 g Ruß liegt.

Insbesondere geeignet sind Leitfähigkeitsruße mit BET-Oberflächen von über 200 $m^2$/g und DBP-Adsorptionen von größer als 80 ml/100 g bei mittleren Primärpartikelgrößen von unter 50 Nanometer (nm). Derartige elektrisch leitfähige Ruße sind als handelsübliche Spezialruße mit ausgeprägten Strukturen und hohen elektrischen Leitfähigkeiten verfügbar.

Le A 23 926

Für das erfindungsgemäße Verfahren geeignete Polycarbonat-Lösungsmittel sind chlorierte aliphatische und aromatische Kohlenwasserstoffe, wie Methylchlorid, Ethylenchlorid, Chloroform oder Chlorbenzol, und deren Mischungen. Vorzugsweise wird Methylenchlorid eingesetzt, das handelsüblich stabilisiert ist, z.B. durch wirksame Mengen an Ethanol oder Methanol. Diese Lösungsmittel werden gleichzeitig als Dispergiermittel für den Ruß verwendet.

Die Polycarbonatlösungen können entweder direkt nach Abschluß des Herstellungsprozesses des Polycarbonats nach dem Phasengrenzflächenverfahren nach erfolgter Abtrennung und üblicher Wäsche eingesetzt werden, oder durch Lösen von fertigem, unabhängig hergestelltem Polycarbonat in den Lösungsmitteln separat für den Einsatz zubereitet werden.

Im allgemeinen werden Polycarbonatlösungen mit Konzentrationen von 5 bis 20 Gew.-%, bezogen auf Gesamtgewicht an Polycarbonat und Lösungsmittel, bevorzugt.

Die Zugabe des Rußes zur Polycarbonatlösung erfolgt entweder in Substanz oder nach vorheriger separater Dispergierung des Rußes in einem geeigneten Medium.

Es können auch beide Möglichkeiten der Rußzugabe kombiniert werden, wobei dann mit Vorteil eine Feinstdispergierung unter Verwendung bekannter Dispergiereinrichtungen, wie z.B. Rotor-Stator-Apparate, Dissolver-Scheiben, Hochdruckhomogenisatoren, Ultra-Schallsonatoren oder Perlmühlen mit z.B. Stahlkugeln von 0,5 bis 3 mm Durchmesser erreicht wird (siehe dazu auch EP-OS 0141310 (Le A 22590-EP)).

Le A 23 926

Die Ruß/Polycarbonat/Lösungsmittel-Dispersionen sollen in der Regel Feststoffgehalte an Polycarbonat plus Ruß von 6 Gew.-% bis 30 Gew.-%, vorzugsweise von 8 Gew.-% bis 20 Gew.-%, bezogen auf Gesamtgewicht an Polycarbonat plus Ruß plus Polycarbonatlösungsmittel plus gegebenenfalls Rußdispergiermittel, enthalten und werden vor dem Eindampfen des Lösungsmittels und gegebenenfalls des Dispergiermittels vorzugsweise filtriert mit Filtern, die mittlere Maschenweiten von etwa 20 - 400 Öm haben.

Die Entfernung des Lösungsmittels und gegebenenfalls des Dispergiermittels erfolgt bei Temperaturen unter $140^0$ C, vorzugsweise unter $60^0$ C beispielsweise durch Verdampfen oder Trocknen.

Das Verdampfen bzw. Trocknen kann beispielsweise erfolgen durch Vergießen in Schichten bis zu 3 mm auf beheizten Unterlagen wie z.B. Bändern, Gießtrommeln etc. und unter Abdampfen des Lösungsmittels im Luftstrom mit anschließender Nachtrocknung, wobei die erhaltenen Ruß/Polycarbonat-Massen bis zu 5 Gew.-% Restlösungsmittel enthalten können. Diese Ruß/Polycarbonat-Massen können durch Zerkleinern in z.B. Schneid- oder Schnitzelmühlen in riesel- und extrusionsfähige Ruß/Polycarbonat-Compounds überführt werden.

Die so erhaltenen Polycarbonat/Ruß-Mischungen bzw. die eingangs erwähnten Gießfolien werden in bekannten Anlagen, die für die Herstellung von rieselfähigen Compounds aus z.B. Folien-, Faser-, Schaumstoffresten geeignet sind, bei Temperaturen von ca. $160^0$ C bis $240^0$ C, vorzugsweise von

Le A 23 926

170° C bis 200° C zu Ruß/Polycarbonat-Compounds verdichtet, wobei die eingesetzten Mischungen bzw. Gießfolien zunächst in Schnitzelform vorgeschnitten und anschließend zwischen einer rotierenden und einer stehenden Scheibe zu zopfförmigen Massen gesintert werden, die mittels Schneidwerkzeugen auf die endgültige Korngröße von ca. 1 bis 5 mm Länge und 1 bis 4 mm Durchmesser zerkleinert werden. Die Schüttdichte der erhaltenen Ruß/Polycarbonat-Compounds kann durch Änderung der Betriebsbedingungen wie Durchsatz, Kühlung und Spaltbreite der Friktionsscheiben verändert werden und beträgt günstigerweise 350 g/l bis 650 g/l, vorzugsweise 400 g/l bis 600 g/l.

Die so erhaltenen Compounds mit Rußgehalten zwischen 10 und 35 Gew.-% können mit weiterem thermoplastischem Polycarbonat vermischt werden, wobei der Rußgehalt dadurch jedoch nicht unter 10 Gew.-% sinken darf. Diese Gemische können anschließend in üblicher Weise extrudiert werden, und zwar auf Ein- oder Doppelwellenextrudern bei Schmelztemperaturen von 280° bis 350°C,, vorzugsweise von 290° C bis 340° C.

Die oben beschriebenen Compounds mit Rußgehalten zwischen 10 und 35 Gew.-% können, gegebenenfalls nach Abmischung mit weiterem thermoplastischem Polycarbonat, auch auf üblichen Spritzgußmaschinen bei Temperaturen von 280 bis 350° C zu Spritzgußartikeln verarbeitet werden. Vor der erfindungsgemäßen Extrusions- oder Spritzgußverarbeitung können den Compounds übliche Additive in wirksamen Mengen, wie Stabilisatoren, Entformungsmittel, Flammschutzmittel, Glasfasern und/oder Kohlefasern zugefügt werden.

Le A 23 926

Die erfindungsgemäß durch Extrusion oder Spritzguß erhaltenen rußgefüllten Polycarbonatformkörper, wie beispielsweise Platten oder Extrusionsfolien, haben ein günstiges Eigenschaftsbild, indem sie niedrige elektrische Widerstandswerte, wie spez. Durchgangswiderstand und Oberflächenwiderstand, aufweisen, indem die Höhe dieser Widerstandswerte unabhängig davon ist, an welcher Stelle des Formkörpers sie gemessen werden, und indem sie sich durch hohe Zähigkeiten und Reißdehnungen auszeichnen.

Die technische Verwendung der erfindungsgemäß erhältlichen Polycarbonatformkörper besteht beispielsweise in der Herstellung von hitzebeständigen Widerstandsfolien, und von dielektrischen Schichtungen zum Schutz gegen elektrostatische Aufladungen für empfindliche elektronische Bauteile.

Dabei können die erfindungsgemäß erhältlichen Polycarbonatextrusionsfolien wegen ihrer guten mechanischen Eigenschaften thermisch verformt werden, z.B. durch Tiefziehen bei Temperaturen von ca. 160 bis 300°C, und können somit vorzugsweise zur Herstellung von Schutzkappen, Transportbehältern/-bändern und Gehäusen eingesetzt werden, oder generell zur Umhüllung oder Umwicklung von elektronischen Bauteilen verwendet werden.

Gegenstand der vorliegenden Erfindung ist somit auch die Verwendung der erfindungsgemäß erhältlichen Polycarbonatformkörper, insbesondere der Polycarbonatextrusionsfolien auf dem Elektrosektor.

Le A 23 926

Beispiel 1

Unter Verwendung einer Dissolverscheibe und einer Perlmühle (Stahlkugel) wird ein elektrisch leitfähiger Ruß
(mittlere Primärteilchengröße von 30 Nanometer, BET-Oberfläche von 254 $m^2$/g, DBP-Adsorption von 178 ml/100 g) in
einer Methylenchlorid-Lösung eines 2,2-Bis-(4-hydroxy-
phenyl)-propan-Polycarbonats mit einer relativen Viskosität von 2,10 (gemessen an 5 g pro 1 $CH_2Cl_2$ bei 25° C) in
feinster Form suspendiert. Die Ruß/Polycarbonat/Methylenchlorid-Dispersion wird filtriert und auf einer Gießmaschine zu einer rußgefüllten Polycarbonatfolie mit einem
Rußgehalt von 27,5 Gew.-% und einer Foliendicke von 30 µm
vergossen. Der Methylenchloridgehalt der Folie beträgt
1,4 % (Gewichtsverlust 1/2 Stunde/160° C).

Aus dem anfallenden Randbeschnitt wird mittels eines sog.
Kompaktors der Fa. Condux bei einem Durchsatz von 80 kg/h
zwischen Friktionsscheiben bei einer Temperatur von 165
bis 185° C ein rieselfähiges Ruß/Polycarbonat-Compound mit
einem Schüttgewicht von 530 g/l hergestellt, das einen
spezifischen Durchgangswiderstand von 1,6 ohm.cm aufweist
(gemessen nach Auflösen des Compounds in Methylenchlorid,
Vergießen zu einer 20 µm dicken Folie und Ermittlung des
spezifischen Durchgangswiderstandes mit einem Veeco-Meßgerät FPP 5000 nach Trocknung der Folie innerhalb
1/2 Std. bei 160° C).

Auf einem Zweiwellenextruder mit einem Längen-Durchmesser-
Verhältnis von 25 werden unter Zudosieren von 1 Teil eines
Bisphenol-A-Polycarbonats (relative Lösungsviskosität von

Le A 23 926

1,33 bei 25°C) zu 2,1 Teilen des oben erhaltenen Ruß/Polycarbonat-Compounds bei Temperaturen von 300-320°C in den einzelnen Zonen und einer Schneckendrehzahl von ca. 50 UpM mittels einer Breitschlitzdüse zwischen einem ersten Walzenpaar aus Gummi/Metall und entsprechender Abzugsvorrichtung Ruß/Polycarbonat-Extrusionsfolien mit einem Gehalt an elektrisch leitfähigem Ruß von 18,5 Gew.-% und Filmstärken von 0,3 bis 0,5 mm hergestellt, die infolge ihrer guten mechanischen Eigenschaften, z.B. durch Tiefziehen, thermisch verformt werden können und sehr gleichmäßige elektrische Widerstandswerte aufweisen, die auf der glatten Metallwalzenseite der Folie gemessen werden.

Tabelle 1

Ruß/Polycarbonat-Extrusionsfolien mit 18,6 Gew.-% Ruß (A)

| Foliendicke (mm) | Oberflächenwiderstand[1] (ohm) | Reißfestigkeit Zugversuch DIN 53 455 $(N/mm^2)$ | Reißdehnung (%) |
|---|---|---|---|
| 0,3 | 4900 | 65,4 | 36,4 |
| 0,5 | 1600 | 60,2 | 21,0 |

[1] Der Oberflächenwiderstand wurde mittels Vierpunktmessung (Meßgerät FPP 5000 der Fa. Veeco) bestimmt (Metallwalzenseite).

Le A 23 926

## Beispiel 2

Das kompaktierte, rieselfähige Ruß/Polycarbonat-Compound mit 27,5 Gew.-% Ruß - wie in Beispiel 1 beschrieben hergestellt - wird mit 1 Teil eines Granulates aus Bisphenol-A-Polycarbonat (relative Lösungsviskosität von 1,33 bei 25° C) auf 2,67 Teile des Ruß/Polycarbonat-Compounds vorgemischt und dann zu Folien mit Dicken von 0,3/0,5 mm und einem Gehalt von 20 Gew.-% Ruß mit einem Zweiwellenextruder, wie in Beispiel 1 angegeben, extrudiert, wobei die erhaltenen Folien folgende elektrische und mechanische Eigenschaften zeigen:

Tabelle 2

Ruß/Polycarbonat-Extrusionsfolien mit 20 Gew.-% Ruß (A)

| Folien-dicke (mm) | Oberflächen-widerstand[1] (ohm) | Reißfestigkeit Zugversuch DIN 53 455 ($N/mm^2$) | Reißdehnung (%) |
|---|---|---|---|
| 0,25 | 2090 | 62,0 | 25,0 |
| 0,5 | 1240 | 64 | 13,0 |

[1] Der Oberflächenwiderstand wurde mit dem Meßgerät FPP 5000 der Firma Veeco (Vierpunktmessung) auf der glatten Seite der Extrusionsfolie (Metallwalzenseite) ermittelt.

Le A 23 926

Beispiel 3

1,5 Teile des in Beispiel 1 verwendeten Ruß/Polycarbonat-
Compounds werden mit 1 Teil eines Polycarbonat-Granulats
auf Bisphenol-A-Basis (relative Viskosität von 1,33 bei
25°C) vorgemischt und mittels eines Einwellenextruders mit
einem Längen-Durchmesser-Verhältnis von 20 bei Temperaturen von 300 bis 315°C zu einem Ruß/Polycarbonat-Granulat
mit 16,5 Gew.-% compoundiert.

Dieses Granulat wird dann unter den in Beispiel 1 aufgeführten Bedingungen mittels eines Zweiwellenextruders zu
Ruß/Polycarbonat-Folien mit Dicken von 0,30 mm extrudiert,
die ausgezeichnete Oberflächenglätte und mechanische
Festigkeit aufweisen.

Tabelle 2

Ruß/Polycarbonat-Extrusionsfolien mit 16,5 Gew.-% Ruß (B)

| Folien-dicke (mm) | Oberflächen-widerstand (ohm) | Reißfestigkeit Zugversuch DIN 53 455 $(N/mm^2)$ | Reißdehnung (%) |
|---|---|---|---|
| 0,3 | 76000 | 63,8 | 56,4 |

Der Schmelzindex dieser rußgefüllten Polycarbonatfolie ist
bei 300°C und 1,2 Kp Belastung 0,67 g/10 Min.
(DIN 53 735). Die relative Viskosität des Polycarbonats
in der Folie beträgt 1,361 (Prüftemperatur 25°C bei einer

Le A 23 926

Konzentration von 0,5 % des Polycarbonats in Methylenchlorid nach Auflösen der Folie und Abfiltrieren des Rußes; Ubbelohde Viskosimeter OC, Kapillardurchmesser 0,46 mm).

Beispiel 4

2,1 Teile bzw. 2,67 Teile des entsprechend Beispiel 1 hergestellten Ruß/Polycarbonat-Compounds mit 27,5 Gew.-% Ruß werden mit 1 Teil eines Bisphenol-A-Polycarbonat-Granulates (relative Viskosität von 1,33 bei 25°C) mittels eines Einwellenextruders, wie in Beispiel 3, angegeben, zu Ruß/Polycarbonat-Granulaten mit 18,6 Gew.-% bzw. 20 Gew.-% Ruß stranggranuliert, aus denen auf einem Zweiwellenextruder unter den Bedingungen, wie in Beispiel 1 aufgeführt, folgende, rußgefüllten Extrusionsfolien hergestellt werden:

Tabelle 4

Ruß/Polycarbonat-Extrusionsfolien mit 18,6/20 Gew.-% Ruß
(B)

| Rußgehalt (Gew.-%) | Folien-dicke (mm) | Oberflächen-widerstand[1] (ohm) | Reißfestig-keit (N/mm²) Zugversuch | Reißdehnung (%) DIN 53 455 |
|---|---|---|---|---|
| 18,6 | 0,25 | 24600 | 63,5 | 41,0 |
| 18,6 | 0,30 | 15500 | 64,0 | 34,6 |
| 18,6 | 0,5 | 10200 | 63,2 | 28,5 |
| 20 | 0,5 | 4200 | 64,0 | 20,2 |

[1] Meßgerät FPP 5000 der Fa. Veeco (Vierpunktmessung auf der glänzenden Folienseite-Metallwalzenseite).

Die Beispiele 3 und 4 zeigen im Vergleich zu den Beispielen 1 und 2, daß eine Vorgranulierung der erfindungsgemäßen Ruß/Polycarbonat-Compounds mit Polycarbonat-Granulat bei den Extrusionsfolien B zu einer weiteren Verbesserung der mechanischen Eigenschaften führt, während die bei der direkten Extrusion erhaltenen Ruß/Polycarbonatfolien A bei gleichen Rußgehalten geringere Oberflächenwiderstände aufweisen.

Weiterhin verdeutlichen die Ergebnisse der Beispiele 1 bis 4, daß diese erfindungsgemäßen Ruß/Polycarbonat-Extrusionsfolien bisher bekannten rußgefüllten Polycarbonat-

Le A 23 926

0209033

Extrusionsfolien, die durch direktes Zudosieren und Einmischen von Leitfähigkeitsruß in Polycarbonat bei der
Folienextrusion oder durch Herstellung von Ruß/Polycarbonat-Granulaten auf Extrudern mit anschließendem
Extrudieren zu Folien erhalten werden, im Hinblick auf die
mechanischen Eigenschaften und Gleichmäßigkeit der elektrischen Eigenschaften weit überlegen sind.

Vergleichsbeispiel

Der in Beispiel 1 beschriebene Leitfähigkeitsruß wird zu
16,5 Gew.-% in ein Bisphenol-A-Polycarbonat (Schmelzindex
von 19,0 g/10 Min. bei 300°C nach DIN 53 735; relative
Viskosität von 1,33 bei 25°C) mit einem Doppelwellenextruder (L/D = 25) bei Schmelztemperaturen von 320°C
eingearbeitet und als Rundstrang extrudiert, der nach dem
Erkalten granuliert wird.

Aus dem Ruß/Polycarbonat-Granulat werden unter den in Beispiel 1 angegebenen Bedingungen rußgefüllte Polycarbonat-
Extrusionsfolien mit einer Dicke von 300 μm hergestellt,
die den elektrisch leitfähigen Ruß entsprechend den
rasterelektronenmikroskopischen Aufnahmen in wesentlich
gröberer Verteilung enthalten als in den Beispielen 1 bis
4, was zu einer erheblich verminderten Reißdehnung und zu
schwankenden Oberflächenwiderständen führt.

Le A 23 926

Tabelle 5

Ruß/Polycarbonat-Extrusionsfolie mit 16,5 Gew.-% Ruß
(Vergleich)

| Foliendicke (mm) | Oberflächen-widerstand[1] (ohm) | Reißfestigkeit Zugversuch DIN 53 455 ($N/mm^2$) | Reißdehnung (%) |
|---|---|---|---|
| 0,3 | 104000-160000 | 58,9 | 7,8 |

[1] Vierpunkt-Messung (Veeco FPP 5000) auf der glänzenden
Seite der Folie (Metallwalzenseite)

## Beispiel 5

20 Teile des elektrisch leitfähigen Rußes des Beispiels 1
(BET-Oberfläche von 254 $m^2$/g) werden unter Verwendung
einer Mischsirene (Rotor-Stator-Prinzip) und einer
Dissolverscheibe in einer Lösung von 80 Teilen Bisphenol-A-Polycarbonats (relative Lösungsviskosität von
1,35 bei $25^0$C) in 420 Teilen Methylenchlorid fein
verteilt. Die erhaltene Ruß/Polycarbonat-Dispersion wird
auf einem Stahlband vergossen.

Das nach Abdampfen des Methylenchlorids erhaltene Folienband mit einer Dicke von 0,1 mm wird mittels des in Beispiel 1 beschriebenen Kompaktors bei einer Temperatur von
ca. $185^0$C zwischen den Friktionsscheiben zu einem rieselfähigen Ruß/Polycarbonat-Compound verarbeitet.

Le A 23 926

Aus diesem Compound mit 20 Gew.-% Ruß werden bei 330° C Massetemperatur und 90° C Werkzeugtemperatur Rundplatten (Durchmesser 80 mm, Dicke 2 mm, Anschnitt seitlich) gespritzt, an denen der Oberflächenwiderstand und spezifische Durchgangswiderstand gemessen wird. Außerdem werden unter gleichen Bedingungen Normkleinstäbe zur Bestimmung von Schlag-, Kerbschlagzähigkeit und Vicat-Erweichungstemperatur hergestellt.

Rundplatten (ø 80 mm, Dicke 2 mm) 20 Gew.-% Ruß

Oberflächenwidrstand      $9,7 \cdot 10^8$ ohm (DIN 53 482) spez. Durchgangswiderstand              $3,7 \cdot 10^4$ ohm.cm (DIN 53 483)

Normkleinstäbe 20 Gew.-% Ruß

Schlagzähigkeit $a_n$ 23° C: ohne Bruch KJ/m$^2$ (DIN 53 453)

Kerbschlagzähigkeit $a_k$ 23° C:      7 KJ/m$^2$        "

Vicat-Erweichungstemperatur VST/B: 155° C        "

Di elektrischen und mechanischen Eigenschaften dieser Spritzgußteile sind gegenüber Formteilen, die aus Compounds oder Granulaten, bei denen der Ruß in die Polymerschmelze eingearbeitet wird, hergestellt werden, erheblich verbessert.

Beispiel 6

Zu 25 Gew.-% (bezogen auf den Gesamtfeststoff Polycarbonat und Ruß) wird ein Leitfähigkeitsruß mit einer BET-Oberfläche von 1000 m$^2$/g und einer DBP-Adsorption von

Le A 23 926

400 ml/100 g in einer Polycarbonat-/Methylenchlorid-Lösung dispergiert. Das verwendete Polycarbonat ist ein Copolycarbonat aus 2,2-Bis-(4-hydroxyphenyl)-propan (99,5 Mol-%) und 1,1-Bis-(4-hydroxyphenyl)-cyclohexan (0,5 Mol-%), das eine relative Viskosität von 1,74 (gemessen bei 5 %iger Konzentration des Polycarbonats in Methylenchlorid bei 25°C) aufweist.

Die in einem Gießprozeß mit anschließender Trocknung erhaltenen Folien mit einer Dicke von 100 µm und einem Restlösungsmittelgehalt an Methylenchlorid von 2,1 Gew.-% (1/2 Stunde 160°C) werden, wie in Beispiel 1 beschrieben, mittels eines Kompaktors zwischen Friktionsscheiben bei ca. 185-195°C zu einem rieselfähigen Ruß/Polycarbonat-Compound mit 25 Gew.-% Ruß verarbeitet.

Das direkte Verspritzen dieses Compounds bei Massetemperaturen von 330°C und 100°C Werkzeugtemperatur führt zu Rundplatten mit sehr gleichmäßigen Oberflächen- und speziellen Durchgangswiderständen und zu Normkleinstäben, die überraschend hohe Schlagzähigkeiten aufweisen, wobei die Wärmeformbeständigkeit gegenüber ungefülltem Polycarbonat erhöht ist.

__Rundplatten (ø 80 mm, Dicke 2 mm) 25 Gew.-% Ruß__

| | | |
|---|---|---|
| Oberflächenwiderstand | 18,5 ohm | (DIN 53483) |
| spez. Durchgangswiderstand | 12 ohm | (DIN 53483) |

__Le A 23 926__

Die Widerstandswerte sind Mittelwerte aus den Ergebnissen von 17 verschiedenen Stellen der Rundplatten

**Normkleinstäbe 25 Gew.-% Ruß**

Schlagzähigkeit $a_n$ 23°C: ohne Bruch KJ/m$^2$ (DIN 53453)
Kerbschlagzähigkeit $a_k$ 23°C:        6 KJ/m$^2$        "
Vicat-Erweichungstemperatur VST/B: 160°C        "

**Beispiel 7**

100 Gew.-Teile des Ruß/Polycarbonat-Compounds (wie in Beispiel 1 beschrieben, mit 27,5 Gew.-% Leitfähigkeitsruß) hergestellt durch Eindampfen einer ruhenden Dispersion des Rußes in einer Lösung des Polycarbonats in Methylenchlorid und anschließendes Kompaktieren, werden mit 67 Gew.-Teilen eines Bisphenol-A-Polycarbonats mit einer relativen Lösungsviskosität von $\eta$ rel. = 1,32 bei 25°C als Granulate mechanisch gemischt. Aus dem Granulatgemisch werden nach Vortrocknung bei 120°C bei 320°C Massetemperatur und 100°C Werkzeugtemperatur Rundplatten (Durchmesser 80 mm, Dicke 2 mm) gespritzt. Der Gehalt an Ruß in diesen Platten beträgt 16,5 Gew.-%. An diesen Platten wurden folgende elektrische Widerstandswerte gemessen:

Oberflächenwiderstand:        $7,4 \cdot 10^5$ ohm (DIN 53482)
spez. Durchgangswiderstand: $3,3 \cdot 10^6$ ohm (DIN 53482)

Die elektrischen Eigenschaften der Rundplatten sind so gleichmäßig, daß die an verschiedenen Stellen der Platten gemessenen Oberflächenwiderstände nur um maximal $0,5 \cdot 10^1$ ohm von dem obengenannten Mittelwert abweichen.

Le A 23 926

Beispiel 8

100 Gew.-Teile des in Beispiel 1 beschriebenen Compounds aus 27,5 Gew.-% Leitfähigkeitsruß und 73 Gew.-% Polycarbonat (relative Lösungsviskosität von η rel. = 1,925 nach erfolgter Kompaktierung) werden mit 67 Gew.-Teilen Polycarbonat (rel. Lösungsviskosität von η rel. = 1,32) als Granulate gemischt. Das Granulat-Gemisch wird dann bei 120°C vorgetrocknet und anschließend in einem Einwellenextruder mit einer Dreizonenschnecke (Kompressionsverhältnis 1:2) geschmolzen und homogenisiert. Die Schmelze wird bei 300°C als Rundstrang extrudiert, der nach dem Erkalten granuliert wird. Aus dem Granulat werden dann nach Vortrocknen bei 120°C bei 320°C Massetemperatur und 100°C Werkzeugtemperatur Rundplatten gespritzt, die ebenfalls 16,5 Gew.-% Ruß enthalten. Die elektrischen Widerstandswerte dieser Rundplatten betragen:

Oberflächenwiderstand: $5,0.10^7$ ohm (DIN 53482)
spez. Durchgangswiderstand: $2,1.10^6$ ohm.cm (DIN 53482)

Vergleichsbeispiel zu Beispielen 7 und 8

300 Gew.-Teile Leitfähigkeitsruß (wie in Beispiel 1 verwendet) werden in einer Lösung von 1500 Gew.-Teilen Bisphenol-A-Polycarbonat mit einer relativen Lösungsviskosität von η rel. = 1,35 bei 25°C in 9200 Gew.-Teilen Methylenchlorid mittels einer Dissolverscheibe und einer Perlmühle in feinster Form suspendiert. Zu dieser Suspension werden 6000 Gew.-Teile Chlorbenzol gegeben.

Le A 23 926

Die Suspension wird anschließend mittels einer Zahnraddosierpumpe in einen auf 210° C beheizten geschlossenen Schneckenbereich eines Doppelwellenextruders eingepumpt. Dabei verdampft das Methylenchlorid und wird durch Rückwärtsentgasung, d.h. entgegen der Richtung der Schneckenförderung, abgetrennt. Die so konzentrierte Lösung wird in einer auf 310° C beheizten Ausdampfzone bis zur Schmelze eingedampft. Diese wird nach Passieren einer Vakuumzone, in der ein Druck von 10 mbar herrscht, bei 320° C zu Rundsträngen extrudiert, die nach dem Erstarren granuliert werden.

Aus dem so erhaltenen Compound von 16,5 Gew.-% Ruß und 83,5 Gew.-% Polycarbonat werden nach Vortrocknen bei 120° C bei 320° C Massetemperatur und 100° C Werkzeugtemperatur Rundplatten gespritzt, an denen folgende elektrische Widerstandswerte gemessen werden:

Oberflächenwiderstand:          $1,1.10^{14}$ ohm (DIN 53482)
spez. Durchgangswiderstand:     $3,1.10^{13}$ ohm (DIN 53482)

Die Gleichmäßigkeit der elektrischen Eigenschaften dieser Rundplatten ist nur gering. So weichen die an verschiedenen Stellen gemessenen Oberflächenwiderstände um bis zu $3.10^3$ ohm von dem obengenannten Mittelwert ab.

Das Vergleichsbeispiel zeigt, daß die elektrischen Widerstandswerte von rußgefülltem Polycarbonatformkörpern dann höher sind, wenn das Eindampfen der rußhaltigen Polycarbonatlösungen unter der Einwirkung von Scherenergie statt-findet.

Le A 23 926

0209033

Patentansprüche

1. Verfahren zur Herstellung von rußgefüllten Polycarbonatformkörpern mit Gehalten an Ruß zwischen 10 und 35 Gew.-%, dadurch gekennzeichnet, daß man Polycarbonate mit 10 bis 35 Gew.-% Ruß einer Primärteilchengröße von kleiner 200 nm bei Temperaturen von 30 bis 80°C, vorzugsweise 40 bis 70°C in einem Lösungsmittel für das Polycarbonat vermischt, die erhaltene Lösung bei Temperaturen unter 140°C ohne Einwirkung von Scherenergie eindampft und das resultierende Gemisch nach Verdichtung zu Compounds, gegebenenfalls unter Zusatz von weiterem thermoplastischem Polycarbonat in üblicher Weise extrudiert oder spritzgießt.

2. Verfahren gemäß Anspruch 1, dadurch gekennzeichnet, daß man anstelle des primär hergestellten Gemisches übliche rußgefüllte Polycarbonatgießfolien mit Rußgehalten zwischen 10 und 35 Gew.-% einsetzt.

3. Polycarbonatformkörper erhältlich nach den Verfahren der Ansprüche 1 bis 3.

4. Verfahren gemäß Ansprüche 1 und 2, dadurch gekennzeichnet, daß man vor der 2. Stufe des Verfahrens, nämlich der Extrusion bzw. des Spritzgießens, den rußhaltigen Polycarbonatgemischen übliche Additive in wirksamen Mengen, ausgewählt aus Stabilisatoren, Entformungsmitteln, Flammschutzmitteln, Glasfasern und/oder Kohlefasern zufügt.

Le A 23 926

5. Polycarbonatformkörper, erhältlich nach Anspruch 4.

6. Verwendung der Polycarbonatformkörper der Ansprüche 3 und 5 auf dem Elektrosektor.

Le A 23 926

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | EP-A-0 141 310 (BAYER) <br> * Ansprüche 1-3; Beispiel 1 * <br> --- | 1-6 | C 08 K 3/04 <br> C 08 L 69/00 <br> H 01 B 1/24 |
| A | DE-A-1 931 561 (FUJI PHOTO FILM CO.) <br> * Ansprüche 1-3 * <br> --- | 1-6 | |
| D,A | BE-A- 720 314 (FUJI SHASHIN FILM) <br> * Ansprüche 1-3; Beispiel 1 * <br> --- | 1-6 | |
| A | EP-A-0 105 090 (GENERAL ELECTRIC) <br> * Anspruch 1; Beispiel 1 * <br> ----- | 1-6 | |

RECHERCHIERTE SACHGEBIETE (Int. Cl.4)

C 08 K
H 01 B
C 08 J

Der vorliegende Recherchenbericht wurde für alle Patentansprüche erstellt.

| Recherchenort | Abschlußdatum der Recherche | Prüfer |
|---|---|---|
| DEN HAAG | 31-10-1986 | DECOCKER L. |